Europäisches Patentamt

European Patent Office

Office européen des brevets

(19)

(11) Veröffentlichungsnummer : **0 195 875**
**B1**

(12) **EUROPÄISCHE PATENTSCHRIFT**

(45) Veröffentlichungstag der Patentschrift :
01.02.89

(21) Anmeldenummer : 85810126.4

(22) Anmeldetag : 25.03.85

(51) Int. Cl.⁴ : **G 01 G 21/24, G 01 L 1/10**

(54) **Massen- und Kraftmessgerät.**

(43) Veröffentlichungstag der Anmeldung :
01.10.86 Patentblatt 86/40

(45) Bekanntmachung des Hinweises auf die Patenterteilung : 01.02.89 Patentblatt 89/05

(84) Benannte Vertragsstaaten :
**AT BE CH DE FR GB IT LI NL SE**

(56) Entgegenhaltungen :
DE--A-- 3 242 954
DE--A-- 3 243 350
FR--A-- 2 112 216
US--A-- 4 065 962
PATENTS ABSTRACTS OF JAPAN, Band 5, Nr. 202 (P-
95)[874], 22 Dezember 1981, Tokyo, JP; & JP - A - 56
125628

(73) Patentinhaber : **K-TRON Patent AG**
**Limmatquai 3**
**CH-8001 Zürich (CH)**

(72) Erfinder : **Saner, Kasper**
**Chrummacher 2**
**CH-8600-Dübendorf (CH)**

(74) Vertreter : **Eder, Carl E. et al**
**Patentanwaltsbüro EDER AG Münchensteinerstrasse**
**2**
**CH-4052 Basel (CH)**

## Beschreibung

Die vorliegende Erfindung bezieht sich auf ein Massen- und Kraftmessgerät mit einem Gestell, einem Lastträger, Mitteln zur senkrechten und parallelen Führung des Lastträgers und einem Messsystem.

Solche Geräte sind bekannt, z. B. aus dem US Patent 3.423.999 oder der Europäischen Patentanmeldung 0 156 931 (Anmeldungs-Nr. 84103601.5). Es ist ferner bekannt, dass bei Waagen im allgemeinen das Eigengewicht der Waage für deren Herstellungs- und Transportkosten massgebend ist.

Diese Ueberlegungen spielen insb. für Waagen mit einem Höchstlastbereich von 30 kg bis 300 kg eine grössere Rolle. Wird die Waage in herkömmlicher Weise leicht gebaut, so kann sie nicht steif genug sein, um zu vermeiden, dass Verformungen des Gestelles oder des Lastträgers auf das Messystem in unberechenbarer Weise übertragen werden, wodurch Messfehler entstehen. Ist die Waage schwer genug gebaut, um solche Verformungen zu vermeiden, so ist sie meistens wirtschaftlich nicht mehr tragbar.

Die der Erfindung zu Grunde liegende Aufgabe besteht darin, ein Massen- und Kraftmessgerät im wesentlichen leichter Bauart zu schaffen, bei welchem unerwünschte Verformungen derart ausfiltriert werden, dass keine störende Momente und Kräfte auf das Messsystem übertragen werden.

Dies wird erfindungsgemäss dadurch erreicht, dass diese Mittel aus zwei durch zwei horizontale, übereinander angeordnete Parallellenker miteinander verbundenen, starren Platten bestehen, und dass eine dieser Platten mit dem Lastträger und die andere Platte mit dem Gestell je mittels eines Drehgelenkes und eines Haltelenkers verbunden sind.

In der beiliegenden Zeichnung sind Ausführungsbeispiele des Erfindungsgegenstandes schematisch dargestellt.

Es zeigen :

Fig. 1 ein erstes Ausführungsbeispiel,

Fig. 2 in schaubildlicher Darstellung das Gestell und die Mittel zur Führung des Lastträgers,

Fig. 3 eine Variante zu Fig. 1,

Fig. 4 eine andere Ausführung der Führungsmittel,

Fig. 5 ein zweites Ausführungsbeispiel,

Fig. 6 eine Variante zu Fig. 5, und

Fig. 7 eine zweite Variante.

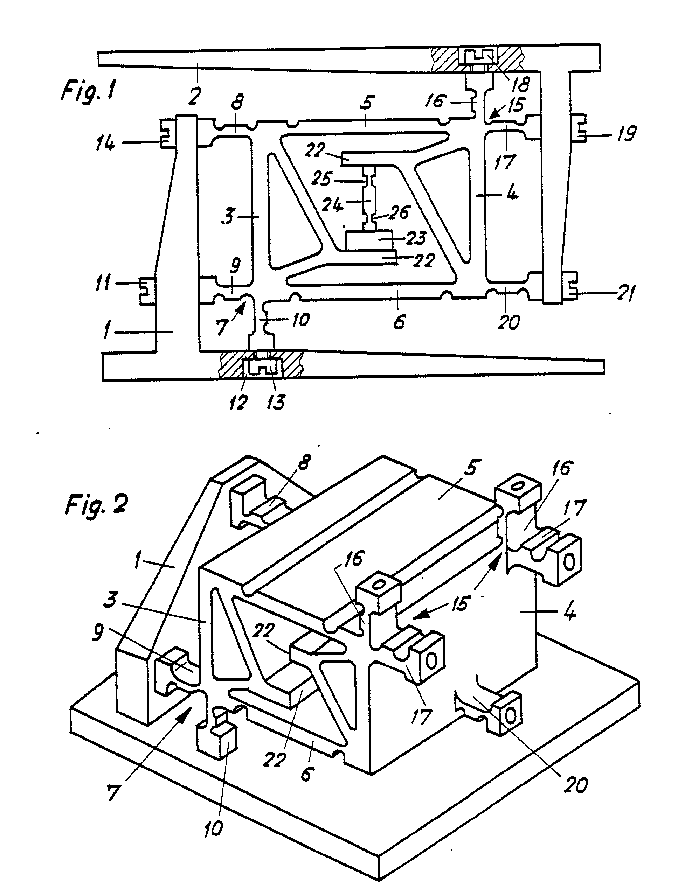

Das in Fig. 1, 2 dargestellte Gerät ist als Massenmesser ausgebildet. Er weist ein Gestell 1 und einen Lastträger 2 auf. Die Mittel zur senkrechten und parallelen Führung des Lastträgers 2 in Bezug auf das Gestell 1 bestehen aus zwei senkrechten, starren Platten 3, 4, die mittels zweier übereinander angeordneten Parallellenkern 5, 6 miteinander verbunden sind. Die Parallellenker 5, 6 sind an ihren beiden Enden mit den Platten 3, 4 verbunden.

Die Platte 3 ist über ein axiales, zweiteiliges Drehgelenk 7 und einen Haltelenker 8 mit dem Gestell 1 verbunden. Das axiale Drehgelenk 7 besteht aus zwei Lenkern 9, 10. Der Lenker 9 ist waagrecht angeordnet und an einem Ende mit der Platte 3 verbunden und an dem anderen Ende mittels einer Schraube 11 mit dem Gestell 1 fest verbunden. Der Lenker 10 ist senkrecht angeordnet, sein oberes Ende ist mit der Platte 3 verbunden und sein unteres Ende ist mittels einer in einer Aussparung 12 des Gestelles 1 angebrachten Schraube 13 mit dem Gestell 1 fest verbunden. Der Haltelenker 8 ist an einem Ende mit der Platte 3 verbunden und an seinem anderen Ende mittels einer Schraube 14 mit dem Gestell 1 fest verbunden. Die Platte 4 ist in symmetrischer Weise am Lastträger 2 befestigt. Ein zweiteiliges Drehgelenk 15, bestehend aus zwei Lenkern 16, 17, die mittels Schrauben 18 bzw. 19 mit dem Lastträger 2 fest verbunden sind, entspricht dem Drehgelenk 7. Ein Haltelenker 20, der mittels einer Schraube 21 befestigt ist, entspricht dem Haltelenker 8. Die Lenker 16, 17 und 20 sind mit der Platte 4 verbunden.

In Fig. 2 sind die axialen Drehgelenke 7 und 15 je in zwei koaxialen Abschnitten dargestellt, die je an einer Ecke der Platten 3 bzw. 4 angebracht sind. Es versteht sich von selbst, dass sie auch aus einem einzigen Stück bestehen könnten, das sich z. B. über mindestens einen Teil der Länge der Kante der Platten 3, 4 erstrecken könnte.

Die Platten 3 und 4 weisen je einen Ausleger 22 auf. Auf dem Ausleger 22 der Platte 3 ist ein Messsystem 23 befestigt, das über eine Stelze 24 mit dem Ausleger 22 der Platte 4 verbunden ist. Die Stelze 24 weist zwei je ein elastisches Gelenk bildende Verjüngungen 25, 26 auf. Wird eine Last auf den Lastträger 2 aufgelegt, so führt er eine virtuelle senkrechte Bewegung aus. Die verursachte Belastung des Gerätes wird über die Stelze 24 auf das Messsystem 23 übertragen, das als Lastaufnehmer wirkt.

Die Stelze 24 könnte auch durch eine Anzahl von Hebeln ersetzt werden. Diese Hebel könnten wahlweise zum Teil auf der einen und/oder auf der anderen Platte 3, 4 bzw. of deren Auslegern 22 gelagert sein.

Das Messsystem kann z. B. aus einer Kraftmesszelle mit einer schwingenden Saite oder einer Massmesszelle mit zwei schwingenden Saiten, und der entsprechenden Elektronik mit Anzeigeelementen bestehen.

In Fig. 3 ist eine Variante dargestellt. In Fällen in welchen eine sehr niedrige Bauhöhe des Gerätes erwünscht ist, kann der senkrecht angeordnete Lenker 10 der Fig. 1 durch einen schräg angeordneten Lenker 27 ersetzt werden, der an seinem oberen Ende mit der Platte 3 und an seinem unteren Ende über den Lenker 9 mit dem Gestell 1 verbunden ist. Beide Lenker 8 und 27 bilden somit das axiale zweiteilige Drehgelenk 7.

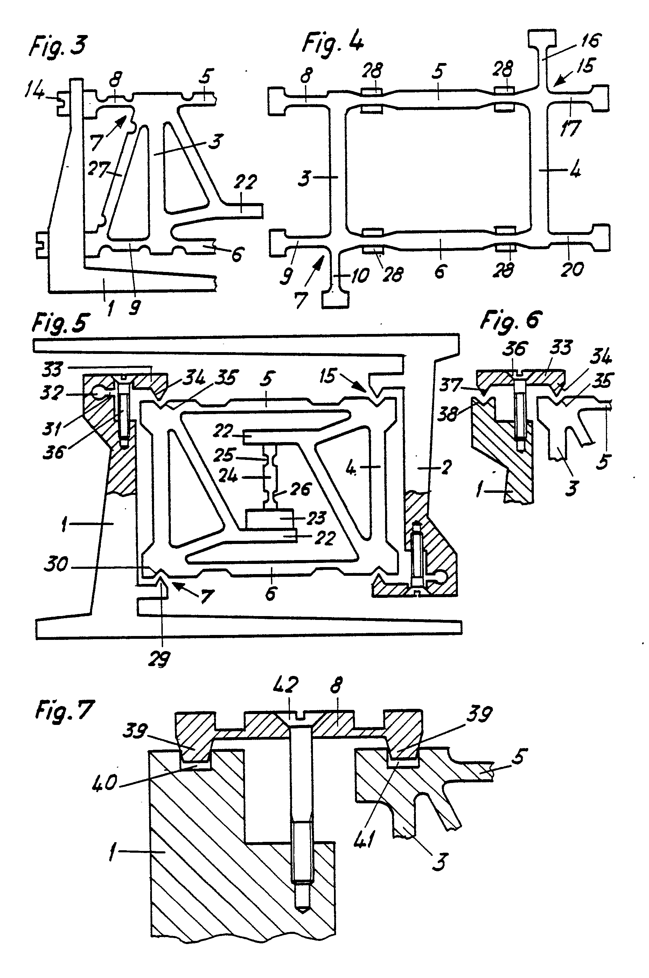

In Fig. 4 ist eine Variante der Ausführung der Führungsmittel dargestellt. Die Parallellenker 5 und 6 sind massiv ausgeführt, sodass sie unter Belastung des Gerätes selber als Lastaufnehmer wirken. Sie erfahren dabei eine S-förmige Verformung. Die dadurch entstehende Längsausdehnungen dienen als Mass für die Belastung. Diese Längsausdehnungen werden mittels Dehnungsmesser 28 erfasst, die in bekannter, nicht dargestellter Weise mit elektronischen Auswertungs- und Anzeigemitteln verbunden sind.

In Fig. 5 ist eine zweite Ausführung des Gerätes dragestellt. Das Drehgelenk 7 am unteren Ende der Platte 3 besteht aus einer am Gestell 1 befestigter Schneide 29 und einer am unteren Ende der Platte 3 vorgesehenen Pfanne 30. Das obere Ende des Gestelles 1 weist einen Schlitz 31 mit runder Bohrung 32 an ihrem Ende auf, sodass dadurch ein waagrechter Arm 33 des Gestelles 1 gebildet wird, an dessen Ende eine nach unten gerichtete Schneide 34 angebracht ist, die mit einer Pfanne 35 der Platte 3 zusammenwirkt. Eine Schraube 36 erstreckt sich durch den Arm 33. Durch Anziehen dieser Schraube 36 kann die Spannung mit welcher die Platte 3 zwischen den Schneiden 29, 34 gehalten ist, eingestellt werden. Der Arm 33 die Schneide 34 und die Pfanne 35 bilden zusammen einen Haltelenker der dem Haltelenker 8 der Fig. 1 entspricht. Die Achsen der Bohrung 32 und der Schneide 34 sind parallel. Es versteht sich von selbst, dass die Schneiden 29, 34 an der Platte 3 und die Pfannen 30, 35 am Gestell 1 angebracht werden könnten. Die Befestigung der Platte 4 am Lastträger 2 ist, wie aus der Zeichnung ersichtlich, identisch und bedarf daher keiner näheren Beschreibung.

In Fig. 6 ist eine Variante der Ausführung nach Fig. 5 dargestellt, bei welcher der Arm 33 an seinem linken Ende mit einer Schneide 37 versehen ist, die mit einer Pfanne 38 des Gestelles 1 zusammenwirkt.

In Fig. 7 ist eine Ausführung dargestellt, die, trotz Aeusserlichkeit mit den Fig. 5, 6, eine Variante der Fig. 1 darstellt. Der Haltelenker weist an seinen beiden Enden einen Kegelstumpf 39 auf. Der linke Kegelstumpf 39 wirkt mit einer Bohrung 40 des Gestelles 1 und der rechte Kegelstumpf 39 mit einer Bohrung 41 der Platte 3 zusammen. Eine Schraube 42 presst die Kegelstümpfe 39 verdrehungs- und verschiebungsfest in die Bohrungen 40, 41.

In allen beschriebenen Ausführungen sind Haltelenker und axiale Drehgelenke so ausgebildet, dass Momente um die Drehachse der Drehgelenke weder über die Haltelenker noch über die Drehgelenke übertragen werden. Solche Momente würden eine unerwünschte Verformung der Parallellenker verursachen, die zu unberechenbaren Messfehlern führen.

Wie aus Fig. 2 ersichtlich ist, können die Führungsmittel, die Haltelenker und die Drehgelenke aus einem einzigen Stück bestehen. Die ganze Gruppe kann z. B. durch Fräsen eines Blockes oder durch Extrusion eines passenden Profils hergestellt werden.

**Patentansprüche**

1. Massen- und Kraftmessgerät mit einem Gestell (1), einem Lastträger (2), Mitteln zur senkrechten und parallelen Führung des Lastträgers (2) und einem Messsystem (23 bzw. 28), dadurch gekennzeichnet, dass diese Mittel aus zwei durch zwei horizontale, übereinander angeordnete Parallellenker (5, 6) miteinander verbundenen, starren Platten (3, 4) bestehen, und dass eine dieser Platten (4) mit dem Lastträger (2) und die andere Platte (3) mit dem Gestell (1) je mittels eines Drehgelenkes (15 bzw. 7) und eines Haltelenkers (20 bzw. 8 ; 33, 34, 35 ; 8, 39) verbunden sind.

2. Massen- und Kraftmessgerät nach Anspruch 1, dadurch gekennzeichnet, dass das Messsystem (23) als Lastaufnehmer dient.

3. Massen- und Kraftmessgerät nach Anspruch 1, dadurch gekennzeichnet, dass die Parallellenker (5, 6) als Lastaufnehmer dienen.

4. Massen- und Kraftmessgerät nach Anspruch 2, dadurch gekennzeichnet, dass das Messsystem (23) an einer dieser Platten (3) befestigt und über eine Stelze (24) mit der anderen Platte (4) verbunden ist.

5. Massen- und Kraftmessgerät nach Anspruch 3, dadurch gekennzeichnet, dass das Messsystem (23) aus an den Parallellenkern (5, 6) angebrachten Dehnungsmessern (28) besteht.

6 Massen- und Kraftmessgerät nach Anspruch 1, dadurch gekennzeichnet, dass die Drehgelenke (7, 15) je aus einen senkrechten und einem waagrechten Lenker (9, 10 bzw. 16, 17) bestehen.

7. Massen- und Kraftmessgerät nach Anspruch 1, dadurch gekennzeichnet, dass die Drehgelenke (7, 15) je aus einer Schneide (29) und einer Pfanne (30) bestehen und dass die Haltelenker je aus einem am Gestell (1) bzw. am Lastträger (2) schwenkbar angebrachten Arm (33) mit Schneide (34) und einer an einer der Platten (3, 4) angebrachten Pfanne (35) bestehen, und dass Mittel (36) zur Einstellung des Anpressdruckes der Schneide (34) in die Pfanne (35) vorgesehen sind.

8. Massen- und Kraftmessgerät nach Anspruch 7, dadurch gekennzeichnet, dass der Arm (33) am Gestell (1) bzw. am Lastträger (2) über eine elastische Biegestelle (31, 32) angebracht ist.

9. Massen- und Kraftmessgerät nach Anspruch 7, dadurch gekennzeichnet, dass der Arm (33) am Gestell (1) bzw. am Lastträger (2) mittels einer Schneide (37) und einer Pfanne (38) angebracht ist.

10. Massen- und Kraftmessgerät nach Anspruch 1, dadurch gekennzeichnet, dass die Haltelenker aus einem Lenker (8) mit zwei Kegelstümpfen (39) bestehen, wobei der eine Kegelstumpf (39) mit einer zylindrischen Bohrung (40) des Gestelles (1) bzw. des Lastträgers (2) und der andere mit einer zylindrischen Bohrung (41) einer Platte (3 bzw. 4) zusammenwirkt und dass Mittel (42) zur Einstellung des Anpressdruckes der Kegelstümpfe (39) in die Bohrungen (41) vorgesehen sind.

**Claims**

1. Mass-measuring and force-measuring device with a frame (1), a load carrier (2), means for the vertical and parallel guidance of the load carrier (2) and a measuring system (23 or 28), characterised thereby, that these means consist of two rigid plates (3, 4) each connected with the other by two horizontal parallel guide rods (5, 6) one arranged above the other and that one of these plates (4) is connected with the load carrier (2) and the other plate (3) with the frame (1) each by means of a respective rotary hinge (15 or 7) and a respective holding guide rod (20 or 8 ; 33, 34, 35 ; 8, 39).

2. Mass-measuring and force-measuring device according to claim 1, characterised thereby, that the measuring system (23) serves as load pick-up.

3. Mass-measuring and force-measuring according to claim 1, characterised thereby, that the parallel guide rods (5, 6) serve as load pickups.

4. Mass-measuring and force-measuring device according to claim 2, characterised thereby, that the measuring system (23) is fastened at one of these plates (3) and connected by way of a foot (24) with the other plate (4).

5. Mass-measuring and force-measuring device according to claim 3, characterised thereby, that the measuring system (23) consists of strain gauges (28) mounted on the parallel guide rods (5, 6).

6. Mass-measuring and force-measuring device according to claim 1, characterised thereby, that the rotary hinges (7, 15) each consist of a respective vertical and a respective horizontal guide rod (9, 10 or 16, 17).

7. Mass-measuring and force-measuring device according to claim 1, characterised thereby, that the rotary hinges (7, 15) each consist of a respective knife edge (29) and a respective pan (30) and that the holding guide rods each consist of a respective arm (33) with knife edge (34) pivotably mounted either at the frame (1) or at the load carrier (2) and a respective pan (35) mounted at one of the plates (3, 4) and that means (36) are provided for the setting of the contact pressure of the knife edge (34) into the pan (35).

8. Mass-measuring and force-measuring device according to claim 7, characterised thereby, that the arm (33) is mounted by way of an elastic bending point (31, 32) either at the frame (1) or at the load carrier (2).

9. Mass-measuring and force-measuring device according to claim 7, characterised thereby, that the arm (33) is mounted by means of a knife edge (37) and a pan (38) either at the frame (1) or at the load carrier (2).

10. Mass-measuring and force-measuring device according to claim 1, characterised thereby, that the holding guide rods consist of a guide rod (8) with two conical frustums (39), wherein the one conical frustum (39) co-operates with a cylindrical bore (40) either of the frame (1) or of the load carrier (2) and the other co-operates with a cylindrical bore (41) of a plate (3 or 4) and that means (42) are provided for the setting of the contact pressure of the conical frustums (39) into the bores (41).

**Revendications**

1. Dispositif de mesure de masses et de forces comportant un bâti (1), un porte-charge (2), des moyens pour guider verticalement et parallèlement à lui-même le porte-charge (2) et un système de mesure (23 ou 28), caractérisé en ce que ces moyens sont constitués de deux plaques rigides (3, 4) reliées l'une à l'autre par deux bielles parallèles horizontales (5, 6) disposées l'une au-dessus de l'autre et en ce que l'une de ces plaques (4) est reliée au porte-charge (2) et l'autre plaque (3) au bâti (1), respectivement au moyen d'une articulation tournante (15 ou 7) et d'une bielle support (20 ou 8 ; 33, 34, 35 ; 8, 39).

2. Dispositif de mesure de masses et de forces selon la revendication 1, caractérisé en ce que le système de mesure (23) sert de capteur de la charge.

3. Dispositif de mesure de masses et de forces selon la revendication 1, caractérisé en ce que les bielles parallèles (5, 6) servent de capteurs de la charge.

4. Dispositif de mesure de masses et de forces selon la revendication 2, caractérisé en ce que le système de mesure (23) est fixé à l'une de ces plaques (3) et est relié à l'autre plaque (4) par l'intermédiaire d'une béquille (24).

5. Dispositif de mesure de masses et de forces selon la revendication 3, caractérisé en ce que le système de mesure (23) est constitué d'appareils de mesure de l'allongement (28) montés sur les bielles parallèles (5, 6).

6. Dispositif de mesure de masses et de forces selon la revendication 1, caractérisé en ce que les articulations tournantes (7, 15) sont chacune constituées d'une bielle verticale et d'une bielle horizontale (9, 10 ou 16, 17).

7. Dispositif de mesure de masses et de forces selon la revendication 1, caractérisé en ce que les articulations tournantes (7, 15) sont chacune constituées d'un couteau (29) et d'un grain (30), et en ce que les bielles supports sont chacune constituées d'un bras (33) muni d'un couteau (34) et monté pivotant sur le bâti (1), respectivement le porte-charge (2) et d'un grain (35) monté sur l'une des plaques (3, 4), et en ce que des moyens (36) sont prévus pour régler la force de pression du couteau (34) dans le grain (35).

8. Dispositif de mesure de masses et de forces selon la revendication 7, caractérisé en ce que le bras (33) est monté sur le bâti (1) ou sur le porte-charge (2) par l'intermédiaire d'une zone de flexion élastique (31, 32).

9. Dispositif de mesure de masses et de forces selon la revendication 7, caractérisé en ce que le bras (33) est monté sur le bâti (1) ou sur le porte-charge (2) au moyen d'un couteau (37) et d'un grain (38).

10. Dispositif de mesure de masses et de forces selon la revendication 1, caractérisé en ce que les bielles supports sont constituées d'une bielle (8) présentant deux troncs de cône (39), l'un des troncs de cône (39) coopérant avec un perçage cylindrique (40) du bâti (1) ou du porte-charge (2) et que l'autre tronc de cône coopérant avec un perçage cylindrique (41) d'une plaque (3 ou 4), et en ce que les moyens (42) sont prévus pour régler la force de pression des troncs de cône (39) dans les perçages (41).

Fig.1

Fig. 2

Fig. 3

Fig. 4

Fig. 5

Fig. 6

Fig. 7